# EUROPEAN PATENT APPLICATION

(11) **EP 1 026 624 A2**
(43) Date of publication of application: **09.08.2000**
(21) Application number: 00500013.8
(22) Date of filing: 28.01.2000
(51) Int. Cl.: G06K 19/02

(54) **A data-carrying card**

(30) Priority: 01.02.1999 ES 9900261
(71) Applicant: Codina Serradell, Juan, 08005 Barcelona (ES)
(72) Inventor: Codina Serradell, Juan, 08005 Barcelona (ES)
(74) Representative: Duran Moya, Luis-Alfonso

(57) **Abstract**

The card comprises, on a first face of a PVC core, a first layer of glue composed of a vinyl resin terpolymer solution, a second layer constituted by an aluminium sheet of annealed or cold-hardened quality, a third layer of a white ink, a fourth layer which can be printed and erased thermally, an additional layer of printing produced by a four-colour process and, finally, a protective varnish layer, there being arranged in succession on the other face of the PVC core a magnetic strip which occupies part of the surface of the PVC core, a layer of offset printing with inks which can be cross-linked, with advertising signs which occupy the portions which are free of the magnetic strip and, finally, a protective varnish with characteristics similar to that of the first face.

## Description

The present invention is intended to provide a data-carrying card of the type which enables data to be carried and retrieved by means of a magnetic strip, which has considerable advantages over those currently known.

As is known the use of credit cards, debit cards, cash cards, discount cards, or cards of other types has spread to all commercial areas, providing the public with media which enable transactions to be carried out in a very convenient manner.

In currently known cards, the data can be examined only by magnetic means, by apparatus specially intended for handling cards. There are no means by which the user of the card can look at movable or variable data connected with the use of his card, for example, the balance remaining on cash cards or the like which have an initial set value which is reduced as transactions are performed.

To solve the above-mentioned problems, the present invention relates to a data-carrying card which, in addition to the normal characteristics of currently-known cards with magnetic strips, enables variable data resulting from the use of the card, for example, balances, rewards obtained, or other similar information to be observed, so that the user can simply ascertain visually data of interest to him relating to the card, with the characteristic that the said data and information which appear visibly on the card can be erased in order to leave the card in the condition of use again.

In order to achieve these objects, the card of the present invention is characterized by a specific combination of component layers in which the distinguishing feature is the arrangement of a layer of a material or ink which can be thermally printed and erased, so that, in addition to the normal functions of a conventional card, it is possible to write information which can be read by the user and which can subsequently be erased.

The card of the present invention comprises, as a basic substrate, a sheet of PVC with a predetermined quantity of titanium oxide of the rutile type, which is covered on both faces by respective sets of covering layers made up, in summary, as follows: on a first face of the said PVC sheet there are deposited in succession: a layer of glue based on a vinyl resin terpolymer solution, a layer of aluminium, a layer of a so-called white ink on top of which is deposited a layer which can be thermally printed and erased and which is composed of a ketone solution of an acetochloride resin, a hydroxylated resin, a fluorine derivative, a cross-linking agent and a developer, and then a layer of printing by a four-colour offset process with inks which dry by an oxidizing process or which can be cross-linked by radiation and, finally, a layer of protective varnish applied by silk-screen or flexographic processes. On the other face of the central PVC core, the card bears a magnetic strip of standard width and thickness and is completed by the printing of any advertising or other signs on the parts left free by the magnetic layer and, finally, has a layer of protective varnish identical to that used for the outer layer of the first side.

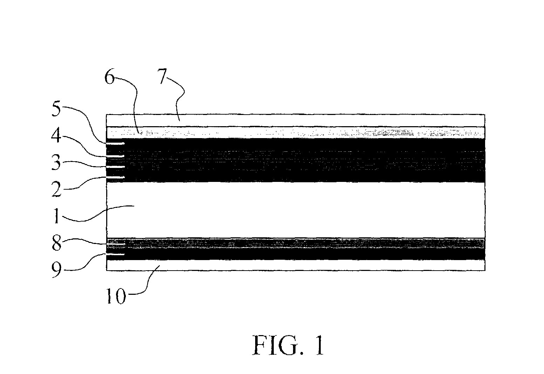

For a better understanding, Figure 1, which is a schematic view of a cross-section of a card formed in accordance with the present invention, is appended by way of example.

As can be appreciated from the drawing, which is of a non-limiting, explanatory nature, the core of the card is constituted by a PVC substrate 1 constituted by a PVC resin with a K-value of between 68 and 74 or, more preferably, of between 70 and 72, into which a quantity of between 6 and 15% or, more preferably, between 8 and 10% of titanium oxide of the rutile type is introduced. The other typical ingredients may be constituted by stabilizers which may be cadmium salts or, preferably, bisphenol A di-epoxide in a quantity of 2 to 3%. The other additives such as lubricants, are those typical for this application.

This central sheet is produced by calendering with a thickness of between 400 and 800 microns or, more preferably, with a thickness of between 600 and 620 microns. It may have a shiny appearance or, more preferably, may have a roughness of between RZ 1.6 and RZ 2.6.

The layer of glue 2 applied to one of the faces of the core layer 1 is constituted by a vinyl resin terpolymer solution constituted by polyvinyl chloride, vinyl acetate and maleic acid. This polymer is dissolved in a ketone solvent which may be constituted by methyl ethyl ketone, methyl isobutyl ketone, cyclohexanone, tetrahydrofuran, or mixtures thereof and, preferably, in a solution constituted by a mixture of methyl isobutyl ketone and tetrahydrofurane in a proportion of approximately 75/25.

This layer of glue is intended to produce a thickness of the dry layer of about 12 to 15 microns and, subsequently and before drying, is laminated with a film constituted by an aluminium foil with a thickness of 12 microns. This aluminium foil may be of an annealed quality or of a cold rolled for an increased hardness.

The next layer consists of a layer of white ink which is applied by a silk-screen process so that the said layer of white ink has a thickness of between 4 and 10 microns and preferably between 6 and 7 microns.

On top of the layer 4, a layer 5 which can be printed and erased by thermal methods and which has a thickness of between 4 and 12 microns, preferably between 6 and 8 microns, is deposited, preferably by a silk-screen process, and is constituted by a ketone solution of an acetochloride resin, of a hydroxylated resin normally marketed under the name VAGH vinyl resin, of a fluoranic derivative marketed under the name Pergascript T2R, of a cross-linking agent marketed under the name Desmodur N 75, and of a developing agent formed by condensation of para-aminophenol and stearyl isocyanate.

Printing by a four-colour offset process can be performed on this sensitive layer by means of inks which harden by an oxidizing process or can be cross-linked by radiation, forming the layer indicated 6. The colour density should be low so that the information displayed by the sensitive layer can be read easily. Screening, possibly of between 20 and 50% and more advantageously between 25 and 30% will be used for this printing.

In order to protect the various layers, a layer of varnish 7 is deposited to prevent scratching and to improve sliding.

This varnish may advantageously be formed by a system cross-linked by radiation and its formula preferably comprises:
trifunctional urethane acrylate
hexamethylene diacrylate
hexafunctional silicon acrylate
polytetrafluoroethylene wax
bifunctional acrylated amine
dimethoxyphenyl acetophenone.

This layer of varnish may preferably be deposited by a silk-screen or flexographic process, with a thickness of about 4 microns.

On the other face, the PVC core 1 will bear a magnetic strip 8 with a standard width of half an inch (12.7mm) and a thickness of 15 microns, constituted by a dispersion of iron oxide in a hydroxylated vinyl resin terpolymer, cross-linked by isocyanate.

Printing with any advertising or other signs is then performed by an offset process and with inks which can be cross-linked by radiation, in the regions which are free of the magnetic layer, forming the layer indicated 9.

Although, to facilitate understanding, the layers 8 and 9 are shown superimposed, they are actually disposed at the same level so that the printing of the layer 9 simply occupies the regions which are left free by the magnetic strip which constitutes the layer 8.

The final layer 10 is of a protective varnish identical to that used for the layer 7.

The completed card is stamped in a standard format and can then be printed or erased by means of thermal recording apparatus.

The final thickness of the card produced will be from 680 to 800 (+/-20) microns.

## Claims

1. A data-carrying card of the type which comprises a PVC core to which a magnetic strip, protective layers, and layers of printed graphics are applied, characterized in that it comprises, in combination, arranged in succession, on a first face of the PVC core, a first layer of glue composed of a vinyl resin terpolymer solution, a second layer constituted by an aluminium sheet of annealed or cold-hardened quality, a third layer of white ink, a fourth layer which can be printed and erased thermally, an additional layer of printing produced by a four-colour process and, finally, a protective varnish layer, there being arranged in succession on the other face of the PVC core a magnetic strip which occupies part of the surface of the PVC core, a layer of offset printing with inks which can be cross-linked, with advertising signs which occupy the portions which are free of the magnetic strip and, finally, a protective varnish with characteristics similar to that of the first face.

2. A data-carrying card according to Claim 1, characterized in that the PVC core has a K-value of between 68 and 74, preferably between 70 and 72.

3. A data-carrying card according to Claim 1, characterized in that the PVC core contains, as additives, titanium oxide of the rutile type in a percentage by weight of between 6 and 15%, preferably between 8 and 10%, between 2 and 3% of stabilizers composed of a cadmium salt or of bisphenol A di-epoxide, as well as lubricants.

4. A data-carrying card according to Claim 1, characterized in that the PVC core has a thickness of between 400 and 800 mm, preferably between 600 and 620 mm, and a surface roughness of between RZ 1.6 and RZ 2.6.

5. A data-carrying card according to Claim 1, characterized in that the layer of glue constituted by a vinyl resin terpolymer solution is constituted by polyvinyl chloride, vinyl acetate and maleic acid.

6. A data-carrying card according to Claim 5, characterized in that the polymer of the glue layer has been dissolved in a ketone solvent which may be constituted by methyl ethyl ketone, methyl isobutyl ketone, cyclohexanone, tetrahydrofurane, or mixtures thereof and, preferably, in a solution comprising a mixture of methyl isobutyl ketone and tetrahydrofuran in a proportion of 75/25.

7. A data-carrying card according to Claims 5 and 6, characterized in that the layer of glue has a dry thickness of from 12 to 15 microns.

8. A data-carrying card according to Claim 1, characterized in that the aluminium sheet may be of annealed or cold-hardened quality and has a thickness of approximately 12 microns.

9. A data-carrying card according to Claim 1, characterized in that the layer which can be printed and erased thermally comprises an acetochloride resin, a hydroxylated resin, a fluorine derivative, a cross-linking agent, and a developing agent formed by condensation of para-aminophenol and stearyl isocyanate.

10. A data-carrying card according to Claims 1 and 9, characterized in that the layer which can be printed and erased thermally is applied by a silk-screen process.

11. A data-carrying card according to Claim 1, characterized in that the layer which can be printed and erased thermally has a thickness of approximately 4 to 12 microns and preferably of 6 to 8 microns.

12. A data-carrying card according to Claim 1, characterized in that the four-coloured layer is printed with a low density to permit easy reading of the information of the sensitive layer.

13. A data-carrying card according to Claims 1 and 12, characterized in that the printing is performed through a screen advantageously of between 20 and 50% and preferably between 25 and 30%.
